(19) Europäisches Patentamt
European Patent Office
Office européen des brevets

(11) Veröffentlichungsnummer: **0 285 983**
**A2**

# (12) EUROPÄISCHE PATENTANMELDUNG

(21) Anmeldenummer: **88105051.2**

(51) Int. Cl.⁴ **A01N 31/06**

(22) Anmeldetag: **29.03.88**

(30) Priorität: **08.04.87 DE 3711910**

(43) Veröffentlichungstag der Anmeldung:
**12.10.88 Patentblatt 88/41**

(84) Benannte Vertragsstaaten:
**CH DE FR GR IT LI**

(71) Anmelder: **BAYER AG**
**Konzernverwaltung RP Patentabteilung**
**D-5090 Leverkusen 1 Bayerwerk(DE)**

(72) Erfinder: **Behrenz, Wolfgang, Dr.**
**Untergründemich 14**
**D-5063 Overath(DE)**
Erfinder: **Salvetti, Gianfranco**
**Via Soperga 59**
**I 20127 Mailand(IT)**

(54) **Mittel gegen Kleidermotten.**

(57) Die vorliegende Erfindung betrifft die Verwendung der bekantnen chemischen Verbindung Isoborneol als Wirkstoff gegen Kleidermotten.

EP 0 285 983 A2

## Mittel gegen Kleidermotten

Die vorliegende Erfindung betrifft die Verwendung der bekannten chemischen Verbindung Isoborneol als Wirkstoff gegen Kleidermotten.

Isoborneol besitzt die Struktur

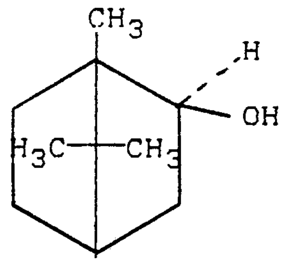

und die folgende Raumformel:

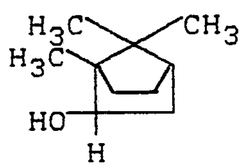

und ist eine seit langem bekannte chemische Verbindung. Sie ist optisch aktiv und kann in verschiedenen Stereoisomeren oder als DL-Racemat vorliegen. DL-Isoborneol besitzt einen Schmelzpunkt von 212°C und bildet farblose Kristalle.

Gemäß Ullmann's Encyklopädie der technischen Chemie, 3. Auflage, München 1966, Band 17, Seite 33 wird Isoborneol als solches kaum verwendet, es dient vornehmlich als Zwischenprodukt für die Herstellung von Campher.

Die Kleidermotte, Tineola biselliella, ist ein weitverbreiteter Schädling, der keratinhaltige Produkte tierischer Herkunft befällt und vernichtet und daher als Textilschädling sehr gefürchtet ist. Zum Schutz gegen Mottenfraß wird bisher in großem Maßstab Paradichlorbenzol eingesetzt, das in Form von sogenannten Mottenkugeln oder Mottenpulvern zu den zu schützenden Textilien in Schränke und Schubladen gelegt wird. Das Paradichlorbenzol entwickelt dabei Dämpfe, die die Motten abtöten. In jüngster Zeit wird jedoch die Anwendung von Paradichlorbenzol als Mottenbekämpfungsmittel aus toxikologischen Gründen für nicht unproblematisch gehalten.

Es wurde gefunden, daß die bekannte Verbindung Isoborneol der Formel

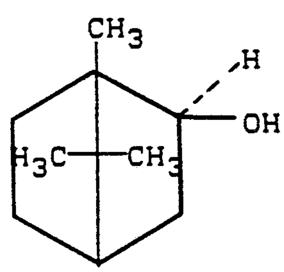

eine starke Wirksamkeit gegen Kleidermotten aufweist. Hierbei kann Isoborneol als DL-Racemat oder auch in Form optischer Isomeren eingesetzt werden.

Überraschenderweise zeigt Isoborneol eine erheblich höhere Wirksamkeit gegen Kleidermotten als die aus dem Stand der Technik bekannte Verbindung Paradichlorbenzol.

Die Bereitstellung von Isoborneol als Mittel gegen Kleidermotten stellt somit eine Bereicherung des Standes der Technik dar.

Das erfindungsgemäß verwendbare Isoborneol weist eine relativ spezifische, stark ausgeprägte Wirksamkeit gegen die Kleidermotte (Tineola biselliela) auf.

Isoborneol kann in für die Mottenbekämpfung übliche Formulierungen überführt werden, wie Lösungen, Emulsionen, Suspensionen, Pulver, Schäume, Pasten, Granulate, Kugeln, Tablette, Aerosole, Wirkstoffimprägnierte Natur-und synthetische Stoffe wie z.B. Mottenpapier, Feinstverkapselungen in polymeren Stoffen und in Hüllmassen, ferner in Formulierungen mit Brennsätzen, wie Räucher patronen, dosen, -spiralen u.ä. Vorzugsweise werden Pulver, Granulate, Tabletten, Mottenkugeln, Mottenzylinder, Mottenpapier und Aerosole eingesetzt.

Diese Formulierungen werden in bekannter Weise hergestellt, z.B. durch Vermischen des Isoborneols mit Streckmitteln, also flüssigen Lösungsmitteln, unter Druck stehenden verflüssigten Gasen und oder festen Trägerstoffen, gegebenenfalls unter Verwendung von oberflächenaktiven Mitteln, also Emulgiermitteln und oder Dispergiermitteln und oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteins mehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstegel; als Emulgier und oder -schaumerzeugende Mittel kommen in Frage; z.B. nichtionogene und anionische Emulgatoren, wie Polyoxyethylen-Fettsäure-Ester, Polyoxyethylen-Fettalkohol-Ester, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo-und Metallphthalocyaninfarb stoffe und Spurennährstoffe wie Salze von Eisen, Mangan, Bor, Kupfer, Kobalt, Molybdän und Zink verwendet werden.

Den Formulierungen können auch Aromastoffe, wie z.B. Parfümöle zugesetzt werden.

Die Isoborneol-haltigen Mittel gegen Kleidermotten können durch Zusatz von wirkungsverstärkenden Substanzen wie z.B. etherischen Ölen, die den Dampfdruck der Präparation erhöhen modifiziert werden.

Andererseits kann durch Zusatz von Stoffen, die den Dampfdruck erniedrigen, wie z.B. Polyethylenglykolen die Wirksamkeit derartiger Zuebreitungen verlängert werden.

Die Formulierungen enthalten im allgemeinen zwischen 10 und 100 Gewichtsprozent Wirkstoff, vorzugsweise zwischen 40 und 100 %, d.h. in den Formulierungen kann auch Isoborneol-Reinsubstanz, z.B. in Pulver-oder Granulatform eingesetzt werden.

Die erfindungemäß verwendbare Isoborneol kann in handelsüblichen Formulierungen sowie in den aus diesen Formulierungen bereiteten Anwendungsformen in Mischung mit anderen Wirkstoffen, wie Insektiziden, Lockstoffen, Sterilantien, Fungiziden, vorliegen. Zu den Insektiziden zählen beispielsweise Phosphorsäureester, Carbamate, Carbonsäureester, chlorierte Kohlenwasserstoffe, Phenylharnstoffe, Pyrethroide, durch Mikroorganismen hergestellte Stoffe u.a..

Die gebrauchsfertigen Formulierungen werden zur Bekämpfung von Motten in abgeschlossenen Räumen und vorzugsweise im Kleider-und Wäscheschränken plaziert.

Im folgenden sollen einige typische Formulierungen beispielhaft aufgeführt werden.

1. Formulierungsbeispiel: Aerosol

Es wurde durch Vermischen der nachgenannten Komponenten eine Aerosolpräparation hergestellt 5 g D.L-Isoborneol. 0.04 g Cyfluthrin (ein Pyrethroid). 14.46 g Aceton aufgefüllt auf 100 g mit Propan Butan Treibgas.

2. Formulierungsbeisiel: Aerosol

Ein weiteres Aerosol-Präparat wurde durch Mischen von 5 g D.L-Isoborneol mit 1 g Parfümöl und 14 g Aceton und anschließendes Auffüllen auf 100 g mit Propan-Butan-Treibgas hergestellt.

3. Formulierungsbeispiel: Tablette

100 g D.L-Isoborneol werden mit 5 g Magnesiumstearat gemischt. vermahlen und mit einer Tablettiermaschine zu Tabletten gepreßt.

4. Formulierungsbeispiel: Tablette

90 g D.L-Isoborneol werden mit 1 g Parfümöl gemischt und mit einer Tablettenmaschine zu Tabletten verpreßt.

5. Formulierungsbeispiel: Granulat

100 g D.L-Isoborneol werden mit 2.5 g natürlichem Gesteinsmehl und 1 g Spindelöl gemischt und so lange in einem Mischer behandelt. bis ein gleichmäßiges. frei fließendes und nicht staubendes Granulat entstanden ist.

6. Formulierungsbeispiel: Granulat

100 g D.L-Isoborneol werden mit 1 g Parfümöl gemischt und so lange in einem Mischer behandelt. bis ein gleichmäßiges. freifließendes und nicht staubendes Granulat entstanden ist.

7. Formulierungsbeispiel: Mottenpapier

10 g D.L-Isoborneol werden in 90 ml Ethanol gelöst und die Lösung auf 1 qm saugfähigem Papier (Papiergewicht 80-100 g pro qm) im Tiefdruckverfahren aufgebracht. Das Papier ist nach den Abdampfen des Lösungsmittels gebrauchsfertig.

Die Wirksamkeit des erfindungsgemäß verwendbaren Isoborneol soll an folgendem Beispiel verdeutlicht werden.

Unter Lang Welt'sche Glasglocken von 19 Litern Inhalt, die auf Alufolie gestellt wurden, kamen in einem Uhrglasschälchen entweder Isoborneol in zu einem Formkörper gepreßten Zustand oder in gemörserter Form und zum Vergleich Paradichlorbenzol. Die Wirkstoffmengen betrugen in allen Fällen je 850 mg Glocke. 14 Tage später kam unter jede Glasglocke ein mit Drahtgaze verschlossener Behälter. in dem auf Wollstoff 10 Kleidermottenlarven des 1.-2. Entwicklungsstadiums gesetzt wurden. Ferner wurden in jede Glocke durch die obere Öffnung 10 Mottenfalter gesetzt und die Glocken danach wieder verschlossen. In zunächst kürzeren und später längeren Zeitabständen wurde die abtötende Wirkung auf die Falter beobachtet, nach 5 Tagen die Zahl der abgelegten Eier bestimmt. sowie die durch die Mottenlarven am Wolltuch angerichteten Fraßschäden nach 7 Tagen festgestellt. Die Ergebnisse wurden in der nachfolgenden Tabelle zusammengestellt:

## T a b e l l e

**Wirkung auf adulte Kleidermotten Stunden oder Tage nach dem Ansatz in Prozent, Zahl der abgelegten Eier sowie Fraßschäden durch Larven**

| Stunden$^h$ bzw. Tage$^d$ | Isoborneol in einem Formkörper | Isoborneol fein gemösert | Paradichlorbenzol in einem Formkörper |
|---|---|---|---|
| $1^h$ | 5 % | 45 % | 0 % |
| $11/2^h$ | 25 % | 55 % | 0 % |
| $2^h$ | 45 % | 80 % | 0 % |
| $21/2^h$ | 65 % | 95 % | 0 % |
| $3^h$ | 75 % | 100 % | 0 % |
| $4^h$ | 80 % | | 0 % |
| $5^h$ | 95 % | | 0 % |
| $24^h$ | 100 % | | 35 % |
| $5^h$ | 74 Eier | 9 Eier | 70 % / 159 Eier |
| $7^d$ | Keine Fraßschäden | Keine Fraßschäden | 6 Fraßlöcher |

## Ansprüche

1. Mittel gegen Kleidermotten, gekennzeichnet durch einen Gehalt an Isoborneol der Formel

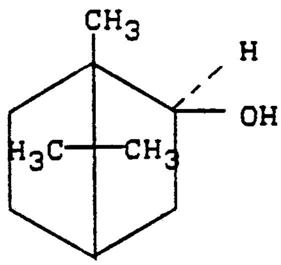

2. Verfahren zur Bekämpfung von Kleidermotten, dadurch gekennzeichent, daß man Isoborneol auf Kleidermotten und oder ihren Lebensraum einwirken läßt.

3. Verwendung von Isoborneol zur Bekämpfung der Kleidermotte.

4. Verfahren zur Herstellung von Mitteln gegen Kleidermotten, dadurch gekennzeichnet, daß man Isoborneol als solches einsetzt oder mit üblichen Zuschlagstoffen gegebenenfalls unter Zusatz weiterer Wirkstoffe vermischt.